# EUROPEAN PATENT SPECIFICATION

(11) **EP 1 613 074 B1**
(45) Date of publication and mention of the grant of the patent: **16.03.2011**
(21) Application number: 05013689.4
(22) Date of filing: 24.06.2005
(51) Int. Cl.: H04N 5/782

(54) **Data recording and reproducing apparatus with recording reservation capability**
Aufnahmevorrichtung und Wiedergabevorrichtung mit Aufnahme-Zeitvorwahl
Programmation d'enregistrement par un menu affiché sur un écran (EPG)

(30) Priority: 28.06.2004 JP 2004189916
(43) Date of publication of application: 04.01.2006
(73) Proprietor: Funai Electric Co., Ltd., Daito-shi, Osaka 574-0013 (JP)
(72) Inventor: Kobayashi, Hideo, Daito-shi Osaka 574-0013 (JP)
(74) Representative: Grünecker, Kinkeldey, Stockmair & Schwanhäusser Anwaltssozietät

(56) References cited:
- EP-A- 1 126 701
- EP-A- 1 501 293
- WO-A-01/01699
- WO-A-02/082808
- US-A1- 2002 100 049
- US-A1- 2002 122 080

## Description

The present invention relates to a data recording and reproducing apparatus for recording and reproducing data with recording reservation capability for television broadcasting. Particularly, the present invention relates to a configuration of displaying information for recording reservation.

In conventional data recording and reproducing apparatuses with recording reservation capability, recording reservation can be conducted with the user designating at least the recording start time, the recording finish time (or duration of recording), and the channel of the television program to be recorded. The date and time of the program under recording reservation, the start and finish time of recording, and the channel number are displayed on the screen of the television monitor in the sequential order of recording (for example, refer to Japanese Patent Laying-Open No. 07-260962).

There is also known a recording and reproducing apparatus adapting a program list display device that can provide a visual display of the status of recording made in the past and a program guide of future broadcasting for the purpose of selecting a channel of a television program and recording reservation (for example, refer to Japanese Patent Laying-Open No. 2001-313878). On the program guide screen in this recording and reproducing apparatus, cells of program information representing each program information are arranged on a table with the channel attribute set along the horizontal axis and the date attribute set along the vertical axis. A display filter set screen is provided to limit the program information to be displayed. Only the program information cell representing a program in a certain time frame on a certain day of the week is displayed on the program guide screen. The certain day of a week is designated by a day-designating operation and a certain time frame of broadcasting is designated by a time-designating operation.

The former recording and reproducing apparatus is disadvantageous in that the status of recording reservation cannot be easily identified since the date, the start and finish time of recording, and the channel under recording reservation are simply listed in the order of recording sequence.

The latter recording and reproducing apparatus is disadvantageous in that the display screen is extremely confusing since too many pieces of information are displayed on one screen, rendering the operation complicated.

A method for displaying recording information in a matrix form is shown in EP-A-1 501293 under Art. 54(3) EPC. One axis of the matrix relates to a plurality of successive days and the other axis relates to the time of a day. Individual elements in this matrix are displayed in a different manner depending on the type of the recording reservations.

US-A-2002/100 049 describes a video recorder displaying program data relating to a plurality of individual channels in a matrix form. One direction of the matrix represents the individual broadcast stations and the other direction relates to the time. An individual recording condition is determined for each program data element, and the program data is displayed in a different kind depending on the determined condition.

A digital video recorder displaying electronic program guide information is described in EP-A-1 126 701. A matrix is displayed wherein one axis of the matrix relates to the individual channels and the other axis relate to the time. After a user has selected an individual element of this matrix, additional program information is displayed to the user.

WO-02/82808 relates to the presentation of electronic program guide data. Program data relating to individual channels is arranged in separate lines and the program data for each line is arranged depending on the respective broadcast time. Different colours are used in order to identify different categories.

US-A-2002/122 080 describes a mobile terminal managing recording information over a video recorder. The mobile terminal provides a list screen displaying the already stored recording information. The individual items in this list screen can be displayed in different colours.

A system providing television program guide data is described in WO-A-001/001 699. Program guide data is received by a video recorder and provided to a user. In particular, the background color of a title is change depending on the status of the recording information.

It is the object of the present invention to provide an improved visualization of already stored program reservation data.

This is achieved by the features of the independent claim.

In accordance with the data recording and reproducing apparatus set forth above, the user can easily identify the status of recording reservation visually.

The foregoing and other objects, features, aspects and advantages of the present invention will become more apparent from the following detailed description of the present invention when taken in conjunction with the accompanying drawings.
Fig. 1 is a functional block diagram representing a configuration of an information recording and reproducing apparatus 100 as an example of a data recording and reproducing apparatus of the present invention.
Fig. 2 represents a menu screen of morning navigation in a recording and reproducing navigation mode.
Fig. 3 represents a menu screen of the week before last of morning navigation of Fig. 2.
Figs. 4, 5 and 6 represent a menu screen of afternoon navigation, evening navigation, and midnight navigation, respectively, in a recording and reproducing navigation mode.
Fig. 7 represents a time frame table to identify the four time frames for every 6 hours in one day.
Fig. 8 represents a management table of a matrix corresponding to a plurality of rectangular regions displayed on a menu screen.
Fig. 9 represents an exemplary recording table generated in a recording and reproducing navigation mode.
Fig. 10 is a flow chart representing a section of the operation for displaying a menu screen in a recording and reproducing navigation mode.
Figs. 11 and 12 represent other sections of the flow chart of Fig. 10.
Fig. 13 represents an exemplary recording table of a time frame corresponding to evening navigation according to a second embodiment of the present invention.
Fig. 14 represents a management table for displaying a menu screen of a time frame corresponding to evening navigation.
Fig. 15 is a flow chart representing a section of the operation for displaying reservation data on a menu screen.
Fig. 16 is a flow chart of operations for displaying a menu screen in recording and reproducing navigation according to a third embodiment of the present invention.

Embodiments of the present invention will be described hereinafter with reference to the drawings. The same elements have the same reference characters allotted, and their designation and function are also identical. Therefore, detailed description thereof will not be repeated.

### First Embodiment

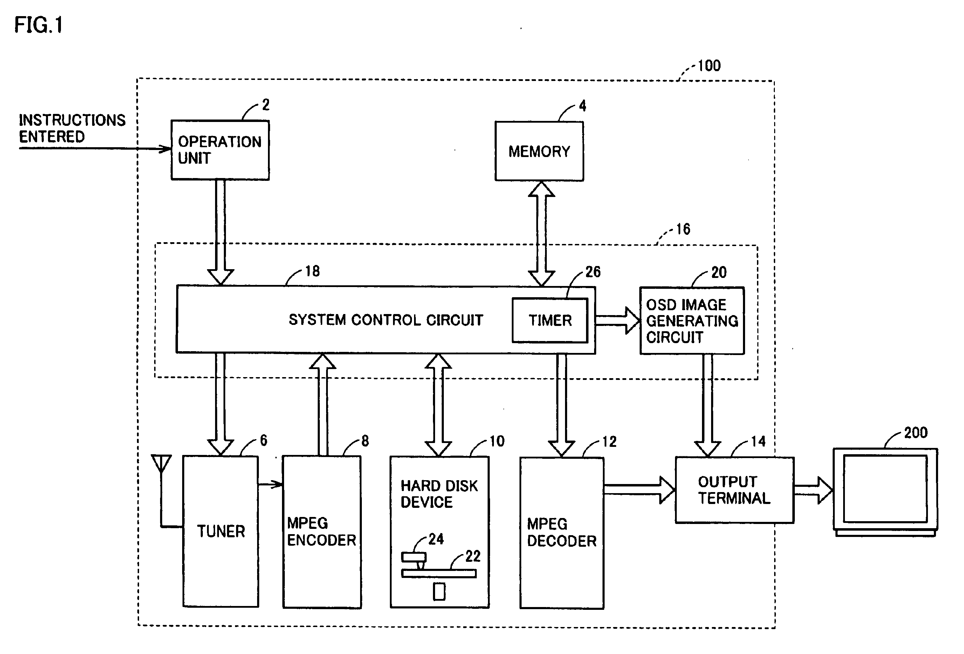

Referring to Fig. 1, an information recording and reproducing apparatus 100 according to the first embodiment of the present invention identified as a data recording and reproducing apparatus of the present invention includes an operation unit 2 receiving a designation input from a user, a tuner 6 for receiving analog television signals (hereinafter, also referred to as TV signal) included in television broadcasting, an MPEG (Moving Picture Expert Group) encoder 8 to encode TV signals supplied from tuner 6 into moving image digital data (hereinafter, referred to as moving image data), a hard disk device 10 to store moving image data, an MPEG decoder 12 to decode moving image data into TV signals, an output terminal 14 for connection with external equipment, a control unit 16 to control the operation of information recording and reproducing apparatus 100, and a memory 4 into which and from which data is written and read in a nonvolatile manner. The TV signals includes at least a video signal. When the signal received at tuner 6 is a digital signal, the encoding process by MPEG encoder 8 may be dispensed with.

Control unit 16 includes a system control circuit 18 including a timer 26 to measure the time, and an OSD (On Screen Display) image generating circuit 20 to generate a menu screen. Memory 4 may be included in system control circuit 18. The time measured by timer 26 may be displayed by a display device (not shown) provided on the casing of information recording and reproducing apparatus 100. Alternatively, a display image of the time generated through OSD image generating circuit 20 may be output via output terminal 14 to external equipment.

Hard disk device 10 includes a hard disk 22 to store a plurality of coded frame data included in moving image data, corresponding respectively to a plurality of frames to be reproduced along a time axis of moving image data. The stored coded frame data are correlated with respective addresses.. Hard disk device 10 also includes a recording and reproducing head 24 to write and read data into and from hard disk 22.

Information recording and reproducing apparatus 100 of the first embodiment is not particularly limited to storing moving image data in hard disk device 10. Moving image data may be stored in a detachable recording medium. A detachable recording medium is, for example, a DVD (Digital Versatile Disk). Alternatively, a detachable recording medium may be a nonvolatile memory card such as an SD (Secure Digital) card.

The operation of information recording and reproducing apparatus 100 of the first embodiment will be described hereinafter.

The user performs various operations by means of operation unit 2, whereby information recording and reproducing apparatus 100 operates based on the various operations under control of system control circuit 18.

"Various operations" refer to , for example, the operation of designating a channel (hereinafter, also referred to as CH), the operation of recording reservation, the operation of designating a program already recorded, the operation of designating recording, the operation of designating reproduction, the operation to stop recording, the operation to stop reproduction, the operation to erase a recorded program, and the like.

Operation unit 2 responds to an operation designated by the user to supply various operation signals to system control circuit 18. Operation unit 2 may be a remote controller (not shown) detached from information recording and reproducing apparatus 100.

When the user inputs designation to change the channel through operation unit 2, a CH designation signal such as of an analog television broadcasting system (NTSC: National Television Standards Committee system, PAL: Phase Alternation by Line system, or SECAM: SEquential Couleur A Memoire system) is supplied from system control circuit 18 to tuner 6. Tuner 6 receives an analog television broadcast wave corresponding to the designated CH. Tuner 6 supplies to MPEG encoder 8 a TV signal obtained by demodulating the received analog television broadcast wave. MPEG encoder 8 applies an MPEG coding process on the TV signal based on an encode control signal of system control circuit 18. The TV signal subjected to MPEG coding process is converted into moving image data. The moving image data is written into hard disk device 10 by system control circuit 18. Hard disk device 10 writes in moving image data, and also reads out the written moving image data through a readout control signal of system control circuit 18. MPEG decoder 12 applies an MPEG decoding process on the moving image data read out based on a decode control signal of system control circuit 18. The moving image data subjected to MPEG decoding process is converted into a TV signal. The converted TV signal is output to external equipment via output terminal 14. External equipment includes, but is not limited to, display device 200.

OSD image generating circuit 20 generates an information display image to display an image according to various information display signal supplied from system control circuit 18. The generated information display image is output to an external source via output terminal 14 as video signals. The information display image includes, for example, a menu screen for the user to view the status of a program under recording reservation, the reproduction status of a recorded program, and to modify/delete reservation data.

Display device 200 provides display of an information display image generated by OSD image generating circuit 20 based on video signals output from output terminal 14.

With regards to an operating mode, information recording and reproducing apparatus 100 includes a recording reservation mode to output and display on display device 200 a menu screen, in the form of video signals, for the user to conduct recording reservation.

According to an operation signal of activating a menu screen for recording reservation by an operation effected by the user through operation unit 2, system control circuit 18 causes OSD image generating circuit 20 to generate a menu screen for recording reservation. The types of program recording reservation mode include an EPG mode using an EPG (Electronic Program Guide), a G code mode employing a G code, and a normal manual mode. In an EPG mode, information of a television program distributed through cable or radio is displayed as a menu screen from which the user can select a program that she/he wishes to be recorded. In a G code mode, the user inputs the G code of a program that she/her wishes to be recorded in a predetermined column on the menu screen. In a manual mode, the user enters the CH, date, and the start and finish time of recording of a program that she/he wishes to be recorded in predetermined columns on the menu screen.

Information recording and reproducing apparatus 100 also includes a recording and reproducing navigation (hereinafter also referred to as recording/reproducing navigation) mode as an operation mode to output and display on display device 200 a menu screen, in the form of video signals, for the user to confirm the status of recording reservation and/or reproduction.

Menu screens output in a recording/reproducing navigation mode of information recording and reproducing apparatus 100 of the present embodiment will be described hereinafter.

In response to an operation signal to activate a menu screen of recording/reproducing navigation through an operation by the user via operation unit 2, system control circuit 18 generates a menu screen for recording/reproducing navigation by OSD image generating circuit 20.

In this menu screen, a plurality of regions in a predetermined shape are displayed in a plurality of rows and a plurality of columns. A plurality of dates are allocated to the plurality of columns, respectively. A plurality of terms corresponding to equal divisions of a selected time frame are allocated to the plurality of rows, respectively. A channel number is displayed at a region in a predetermined shape of the reserved date. The regions in a predetermined shape are displayed in different colors depending upon the status of the program such as a program already recorded and not yet reproduced, a program already recorded and already reproduced, a program under recording reservation, a currently-recorded program, or the like. The user can easily identify the status of recording reservation and/or reproduction visually by looking at this menu screen. The user can select a desired time frame among a plurality of time frames. The user can also select one of the plurality of regions in a predetermined shape to select a specific date and time. The user can also modify/delete the contents of reservation data in a region of a predetermined shape selected through operation by the user via operation unit 2.

System control circuit 18 activates a menu screen corresponding to each of a plurality of time frames. Such time frames are not particularly limited to any specific ones. For example, one day may be divided into every 6 hours, i.e. 4 time frames. The time frame from 6 a.m. to noon corresponds to morning navigation. The time frame from noon to 6 p.m. corresponds to afternoon navigation. The time frame from 6 p.m. to 12:00 midnight corresponds to evening navigation. The time frame from 12:00 midnight to 6 a.m. corresponds to midnight navigation.

System control circuit 18 displays a menu screen of a time frame corresponding to morning navigation, afternoon navigation, evening navigation, and midnight navigation set forth above in response to an input from the user through operation unit 2.

The configuration of menu screens corresponding to the time frames of morning navigation, afternoon navigation, evening navigation, and midnight navigation in the recording/reproducing navigation mode of information recording and reproducing apparatus 100 of the first embodiment will be described hereinafter.

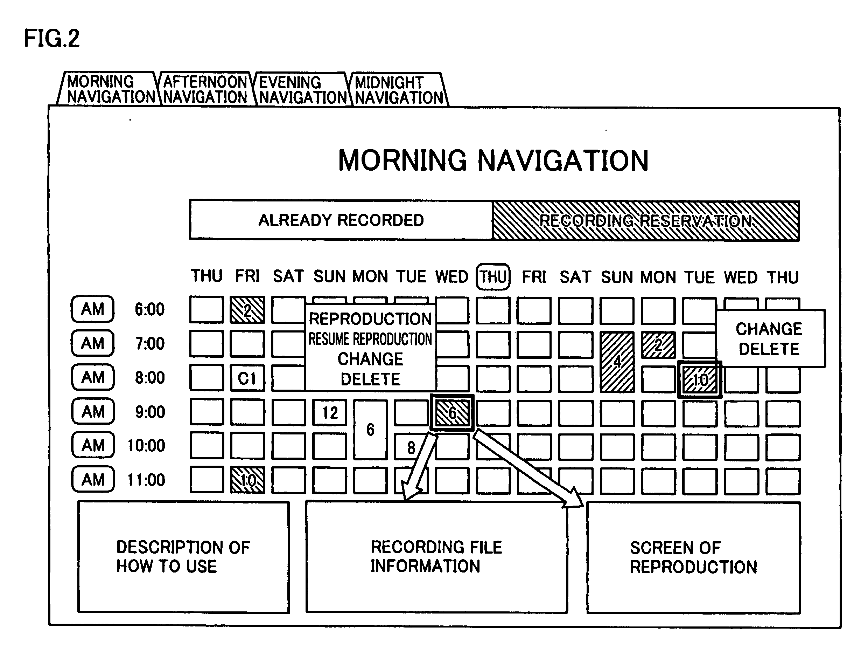

Fig. 2 corresponds to a menu screen of morning navigation.

In response to an operation signal of activating a menu screen in recording/reproducing navigation or an operation signal of activating a menu screen of morning navigation during activation of a menu screen corresponding to another time frame input by the user, system control circuit 18 activates the menu screen of morning navigation.

At the time of activating the menu screen of recording/reproducing navigation, system control circuit 18 can display, in response to an input of an operation signal by the user, a menu screen of a preset time frame among a plurality of time frames based on the initial display time frame information stored in memory 4. Specifically, system control circuit 18 can activate a recording/reproducing navigation menu screen based on any one of morning navigation, afternoon navigation, evening navigation, and midnight navigation as the initial display time frame according to an operation signal input by the user.

When a menu screen is activated, a plurality of rectangular regions are displayed in a matrix, corresponding to respective dates of last week and this week and relevant terms (a definite extent of time). Color display is provided according to the state of the program under recording reservation set last week and set this week. The shape of the region correlated with the date and time of last week and this week is not particularly limited to a rectangle. For example, the region may take the shape of a polygon such as a square or rhombus, or a region in a closed curve such as a circle or ellipsis.

Furthermore, the plurality of rectangular regions set in correspondence with the date and time are displayed in a display color according to the reserved status of a program. This "display color according to a reserved status" is a color modified according to the status of the program such as a program already recorded and not yet reproduced, a program already recorded and already reproduced, a program not yet recorded, a program currently recorded, and the like. For example, a rectangular region corresponding to a program that is already recorded and not yet reproduced is displayed in yellow. A rectangular region corresponding to a program already recorded and already reproduced is displayed in blue. A rectangular region corresponding to a program that is to be recorded is displayed in green. A rectangular region corresponding to a program that is currently recorded is displayed in blinking yellow.

Further on the menu screen, a plurality of specific regions indicating which time frame is currently selected among the plurality of time frames are displayed by OSD image generating circuit 20. Specifically, the plurality of specific regions are set in correspondence with the plurality of time frames, respectively. In response to a selection of one of the plurality of specific regions through an operation signal by the user, system control circuit 18 provides a display of a menu screen of a time frame corresponding to the selected specific region.

By way of example as shown in Fig. 2, system control circuit 18 provides a display with the four frames including the character string of each of morning navigation, afternoon navigation, evening navigation, and midnight navigation aligned in a sequentially and partially overlapping manner with the frame of the character string corresponding to the time frame displayed as the menu screen set at the frontmost side. Alternatively, the frame of the character string corresponding to the time frame displayed as the menu screen may be displayed in a bold line. Alternatively, the frame of the character string corresponding to the time frame displayed as the menu screen may be displayed in a blinking manner.

The cursor displayed on the menu screen of recording/reproducing navigation can be moved by the user through operation unit 2, or by operating a remote controller. When the cursor is to be moved, system control circuit 18 modifies the variable representing the cursor position according to an operation signal from, for example, operation unit 2. The cursor position is thus modified and OSD image generating circuit 20 re-displays the cursor based on the changed variable indicating the cursor position in response to an operation signal.

The user can select one of the plurality of rectangular regions displayed on the menu screen by moving the cursor. Specifically, the user can select a specific day and time to modify/delete the contents of recording reservation. For example, when the user moves the cursor to a certain rectangular region under recording reservation among the regions correlated with the present date in time and onward, measured by timer 26, to select that rectangular region, a window opens in proximity to that rectangular region. The characters of "CHANGE" and "DELETE" are displayed in the window. By selecting "CHANGE" and entering a new CH number through operation unit 2, the channel to be recorded can be changed. If "DELETE" is selected, the CH data is deleted, and the recording reservation of that rectangular region is canceled.

The user can also select a specific day and time to conduct reproduction of a recorded program, resume reproduction of a recorded program, change recording information (title and the like), and delete program data. For example, when the user moves the cursor to a certain rectangular region among the regions correlated with a date and time preceding the present date in time, measured by timer 26, to select that rectangular region, a window opens in proximity to that rectangular region. The characters of "REPRODUCTION", "RESUME REPRODUCTION", "CHANGE", and "DELETE" are displayed in the window. Further, recording file information and a reproduction screen corresponding to the selected rectangular region appears at the bottom area of the menu screen. The description of how to use recording/reproducing navigation is also displayed at the bottom region of the menu screen regardless of the whether a rectangular region is selected or not.

Upon selecting "REPRODUCTION", the menu screen is switched to a screen of the relevant recorded program which will be reproduced from the beginning. Upon selecting "RESUME REPRODUCTION", the menu screen is switched to the screen of the relevant recorded program starting from the site where the previous play of that recorded program ended. Upon selecting "CHANGE" and entering new recording information through operation unit 2, the recording information can be altered. Upon selecting "DELETE", data of a recorded program can be deleted.

When the cursor is moved to a rectangular region corresponding to a recorded program or a program under recording reservation, system control circuit 18 can display details such as information of the corresponding recording program, on a predetermined region of a screen through OSD image generating circuit 20.

By moving the cursor from the rectangular region at the bottom row to a region therebelow, the user can switch the menu screen from morning navigation to afternoon navigation.

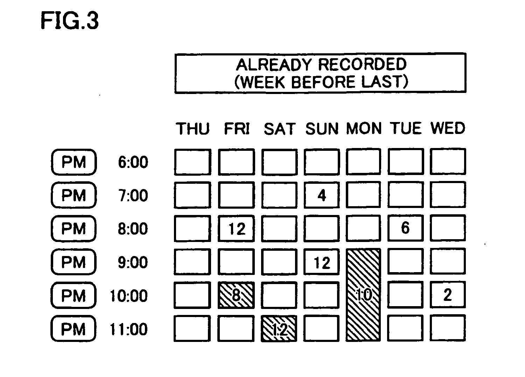

In response to a predetermined operation signal input by the user, a plurality of rectangular regions corresponding to the day and time of the week before last are displayed, as shown in Fig. 3. Each rectangular region is displayed in a color according to the status (already or not yet reproduced) of a program under recording reservation of the week before last.

The operation of system control circuit 18 displaying the menu screens of Figs. 2 and 3 will be described hereinafter.

OSD image generating circuit 20 generates a menu screen of recording/reproducing navigation by displaying a plurality of rectangular regions in a matrix. System control circuit 18 correlates a term with each row of the plurality of rectangular regions displayed in a matrix. System control circuit 18 also correlates a day of the week for each column. The correspondence of allocating the time with respect to each row is not particularly limited. For example, a day of the week may be set in correspondence with each column. The time set in correspondence with each row is a term for every predetermined time intervals in the time frame displayed on the menu screen. System control circuit 18 refers to the time frame information to identify each of the plurality of time frames. Time frame information includes, for example, a time frame table including the start time and finish time of each time frame. In other words, the time frame table identifies each of the time frames of morning navigation, afternoon navigation, evening navigation, and midnight navigation. When a menu screen corresponding to the time frame of morning navigation, for example, is to be displayed, system control circuit 18 sets in correspondence to each row a time for every 1 hour interval from 6 a.m. to 12 o'clock midday with respect to the time frame of morning navigation. The time frame table is stored in, but not particularly limited to, memory 4. For example, the time frame table may be stored in hard disk device 10.

The day of the week correlated with each column is one of Monday, Tuesday, Wednesday, Thursday, Friday, Saturday, and Sunday including the current day. For example, when the menu screen of recording/reproducing navigation is to be activated, system control circuit 18 correlates the day of the week of the current date with the central column in the menu screen. Then, system control circuit 18 sets the day of the week of one preceding week and one succeeding week with respect to the other columns, with the date of today as the origin.

In a similar manner, the time and day of the week are correlated with the plurality of rectangular regions in the menu screen of the week before last in Fig. 3. A day of the week is correlated with each column of the plurality of rectangular regions in Fig. 3, with the central column of the plurality of rectangular regions in Fig. 2 as the origin.

The operation signal of activation input designation of a menu screen of morning navigation during activation of a menu screen corresponding to another time frame is effected by, but not particularly limited to, depression of a time frame change button through operation unit 2 or a remote controller. Accordingly, the screen can be switched to morning navigation, afternoon navigation, evening navigation, or midnight navigation. Alternatively, the user can move the cursor displayed on the menu screen to select a specific region corresponding to any of morning navigation, afternoon navigation, evening navigation, and midnight navigation.

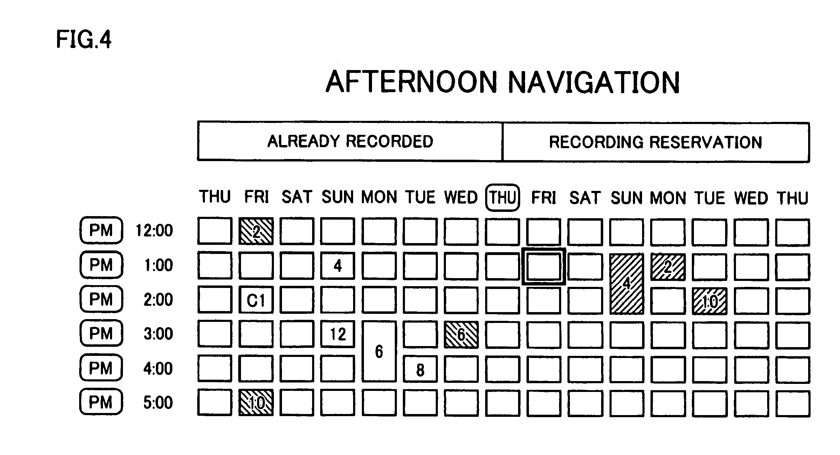

Fig. 4 represents the main part of a menu screen of afternoon navigation in a recording/reproducing navigation mode.

In response to an operation signal corresponding to input designation of activating a menu screen of recording/reproducing navigation or input designation of activating a menu screen of afternoon navigation during activation of a menu screen corresponding to another time frame by the user, system control circuit 18 activates the menu screen of afternoon navigation. The menu screen of afternoon navigation of Fig. 4 differs from the menu screen of morning navigation described with reference to Fig. 2 in the following issues. When a menu screen corresponding to the time frame of afternoon navigation is to be displayed, system control circuit 18 sets in correspondence to each row a time for every 1 hour interval from 12 o'clock midday to 6:00 p.m. for each row of the plurality of rectangular regions displayed on the menu screen based on the time frame table. The user can move the cursor from the rectangular region of the bottom row to a region thereunder to switch the menu screen of afternoon navigation to the menu screen of evening navigation.

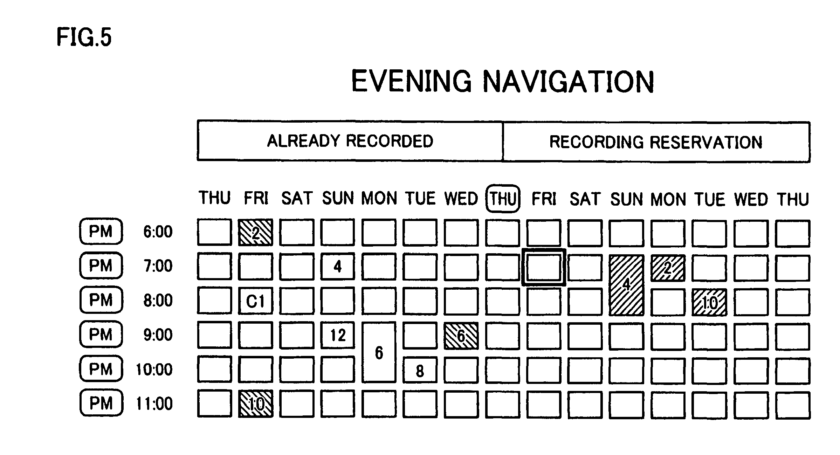

Fig. 5 represents the main part of the menu screen of evening navigation in a recording/reproducing navigation mode.

In response to an operation signal corresponding to input designation of activating a menu screen of recording/reproducing navigation, or input designation of activating a menu screen of evening navigation during activation of a menu screen corresponding to another time frame, system control circuit 18 activates the menu screen of evening navigation. The menu screen of evening navigation of Fig. 5 differs from the menu screen of morning navigation described with reference to Fig. 2 in the following issues. When the menu screen corresponding to the time frame of evening navigation to be displayed, system control circuit 18 sets in correspondence a time for every 1 hour interval from 6:00 p.m. to 12:00 midnight for each row of the plurality of rectangular regions displayed on the menu screen based on the time frame table. The user can move the cursor from the rectangular region on the bottom row to a region thereunder to switch the menu screen of evening navigation to a menu screen of midnight navigation.

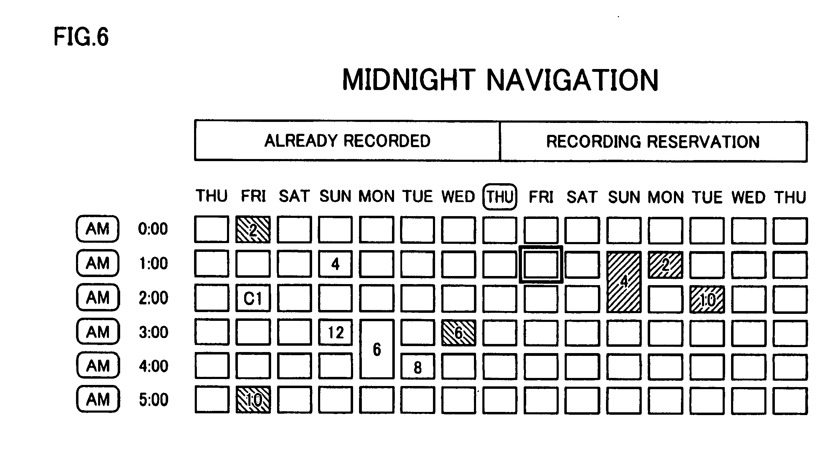

Fig. 6 shows the main part of the menu screen of midnight navigation in a recording/reproducing navigation mode.

In response to an operation signal corresponding to input designation of activating a menu screen of recording/reproducing navigation, or input designation of activating a menu screen of midnight navigation during activation of a menu screen corresponding to another time frame, system control circuit 18 activates the menu screen of midnight navigation. The menu screen of midnight navigation of Fig. 6 differs from the menu screen of morning navigation described with reference to Fig. 2 in the following issues. When the menu screen corresponding to the time frame of midnight navigation is to be displayed, system control circuit 18 sets in correspondence a time for every 1 hour interval from 12:00 midnight to 6:00 a.m. for each row of the plurality of rectangular regions displayed on the menu screen based on the time frame table. The user can move the cursor from the rectangular region at the bottom row to a region thereunder to switch the menu screen of midnight navigation to a menu screen of morning navigation.

In the present invention, the day of the week and time are correlated with the matrix of rectangular regions displayed on the menu screen corresponding to the time frame of morning navigation, afternoon navigation, evening navigation, and midnight navigation. By way of example, a method of using a management table in which the time frame, day of the week, and time are set in correspondence with the matrix will be described here.

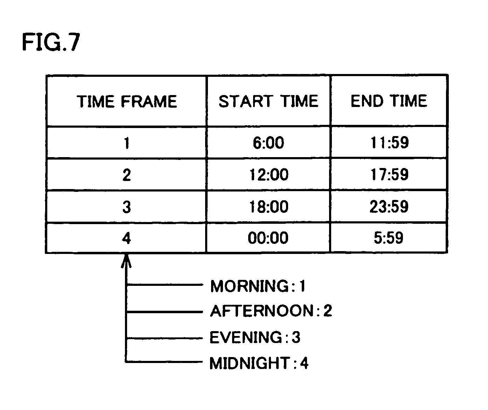

Fig. 7 represents a time frame table to identify the four time frames of one day divided into every 6 hours.

Referring to Fig. 7, system control circuit 18 refers to the time frame table stored in memory 4 or hard disk device 20 when a management table is to be generated. The time table has the start time and finish time preset in each time frame.

The first embodiment of the present invention has one day divided into four time frames of every 6 hours, by way of example. System control circuit 18 correlates respective rows of the rectangular regions displayed in the form of a matrix on the menu screen corresponding to one of respective time frames of morning navigation, afternoon navigation, evening navigation and midnight navigation, with respective times at intervals of a predetermined time included in the time frame from the start time to the end time in the time frame table. Although the predetermined time is not limited to a particular one, system control circuit 18 correlates respective rows with respective times at intervals of an hour, for example.

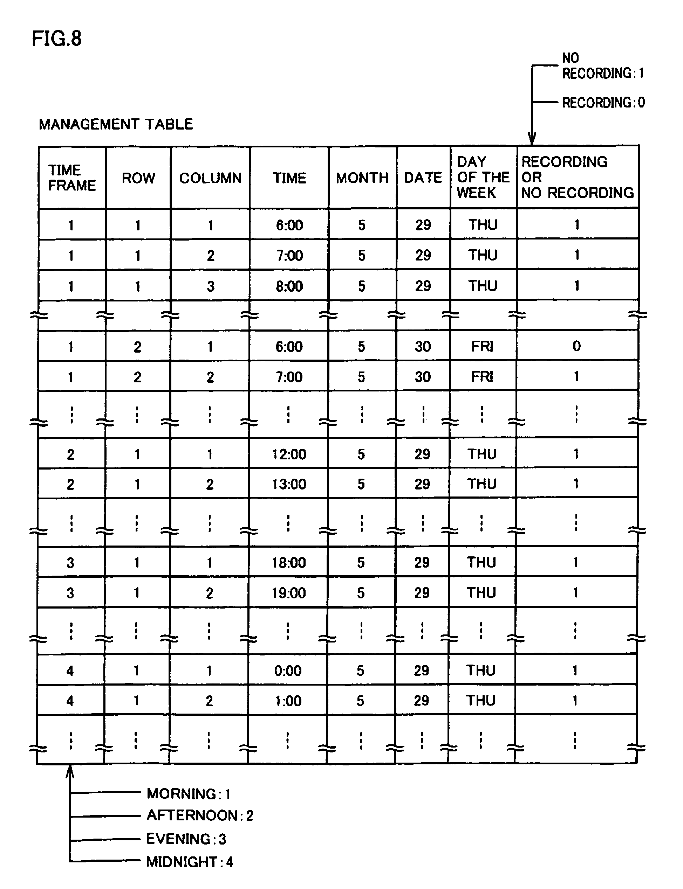

Fig. 8 shows a management table of the matrix corresponding to a plurality of rectangular regions displayed on the menu screen of recording/reproducing navigation.

System control circuit 18 sets the time and day of the week in correspondence in the matrix of the plurality of rectangular regions displayed on the menu screen of recording/reproducing navigation based on the time frame table described with reference to Fig. 7. System control circuit 18 generates or updates the management table after the date and time measured by timer 26 is changed and before the menu screen of recording/reproducing navigation is activated. The management table may be stored in, but not particularly limited to, memory 4, or hard disk device 10 where motion image data is stored, or in a detachable recording medium.

When a management table is to be generated, system control circuit 18 sets in correspondence the time and day of the week with respect to the matrix of each of the plurality of time frames based on the time frame table described with reference to Fig. 7. At this stage, system control circuit 18 correlates the central column of the rectangular regions on the menu screen corresponding to one of respective time frames of morning navigation, afternoon navigation, evening navigation and midnight navigation, with the day of the week of today's date measured by timer 26. With the central column as the origin, system control circuit 18 correlates other columns of the time frames with appropriate dates. Based on the day of the week information, system control circuit 18 adds days of the week corresponding to respective dates to the management table. The information about the day of the week may be stored in memory 4 or stored on hard disk device 10. It is now assumed that today's date is June 5, Thursday, by way of example.

The management table includes a reservation flag indicating whether there is a recording reservation in the corresponding date and time frame based on the recording table in which reservation data associated with recording reservation is registered.

The rectangular regions displayed in a matrix have respective programs classified in colors together with the relevant channel display, according to a program that is already recorded and not yet reproduced, a program that is already recorded and already reproduced, a program that is to be recorded, and a program that is currently recorded, over the span of one week before and after today's date, as described with reference to Fig. 2. In other words, OSD image generating circuit 20 modifies the color display of a rectangular region with respect to respective programs under recording reservation corresponding to the specified day of the week and time based on the management table. In this context, system control circuit 18 refers to the reservation flag in the management table. System control circuit 18 determines whether a program is already recorded or not based on the date and time of recording reservation and the time date measured by timer 26. OSD image generating circuit 20 modifies the display color of the rectangular region under recording reservation based on the referred result and determination result. If the program of interest is currently recorded, system control circuit 18 causes OSD image generating circuit 20 to display the rectangular region of current-recording in a blinking manner.

OSD image generating circuit 20 can modify the display color of a rectangular region corresponding to reservation data indicating recording reservation according to registration of reservation data in the recording table that will be described afterwards.

In response to the user moving the cursor on the menu screen to select a rectangular region corresponding to a recorded program and designate reproduction, system control circuit 18 can reproduce the recording file of the recorded program corresponding to the selected rectangular region.

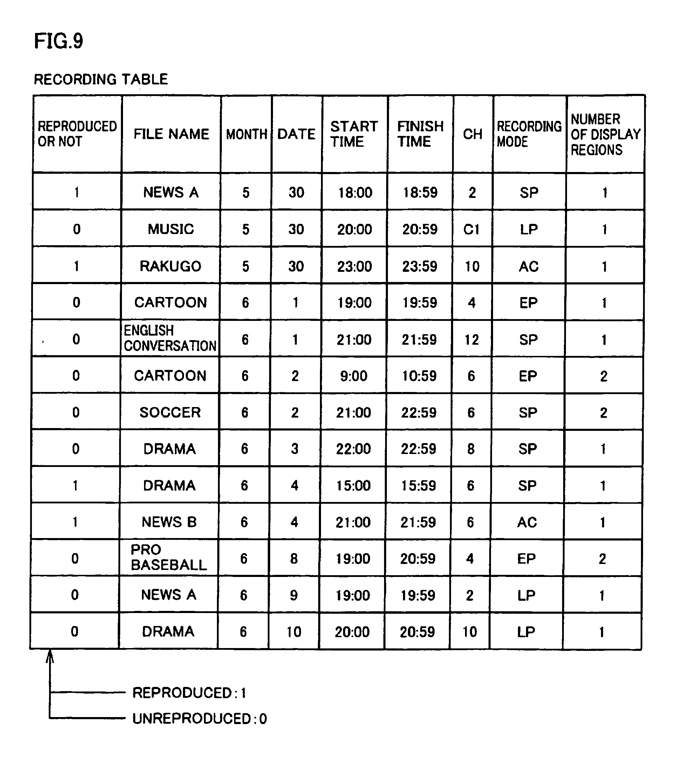

Fig. 9 shows an example of a recording table generated in a recording reservation mode.

The recording table includes reservation data such as the recording information of a program under recording reservation from the menu screen in a recording reservation mode. Specifically, the reservation data includes a reproduction flag indicative of whether reproduced or not, a file name, the date of recording, the recording start time, the recording finish time, a CH corresponding to the program that is to be recorded, the recording mode indicating the picture quality when a program is to be recorded, the number of rectangular regions corresponding to a program that are displayed on the menu screen (hereinafter referred to as "number of display regions"), and data for resume reproduction (not shown). The recording table may be stored in, but not particularly limited to, hard disk device 10, or memory 4.

The reproduction flag indicates whether a recorded program is already reproduced or unreproduced, i.e. not yet reproduced. System control circuit 18 overwrites the reproduction flag of 0 indicating unreproduction with 1 in response to an operation signal corresponding to input designation of reproduction after a rectangular region of a recorded region among the plurality of rectangular regions is selected.

For recording reservation, system control circuit 18 generates reservation data based on the date, time, and CH input by the user. System control circuit 18 registers the generated reservation data on the recording table. At this stage, system control circuit 18 sets all the values in the recording table to the initial value other than the items of the date, the recording start time and recording finish time, and CH. For example, the number of display regions is set to 1.

The registered reservation data can be changed. Specifically, the user can change the detailed information of the recording program on the menu screen. Based on the changed information, system control circuit 18 modifies the corresponding reservation data in the recording table. When the recording finish time is to be changed, system control circuit 18 modifies the number of display regions based on the recording start time and recording finish time. For example, when the period of time from the recording start time to the recording finish time exceeds 1 hour and is less than 2 hours, the number of display regions is modified to 2.

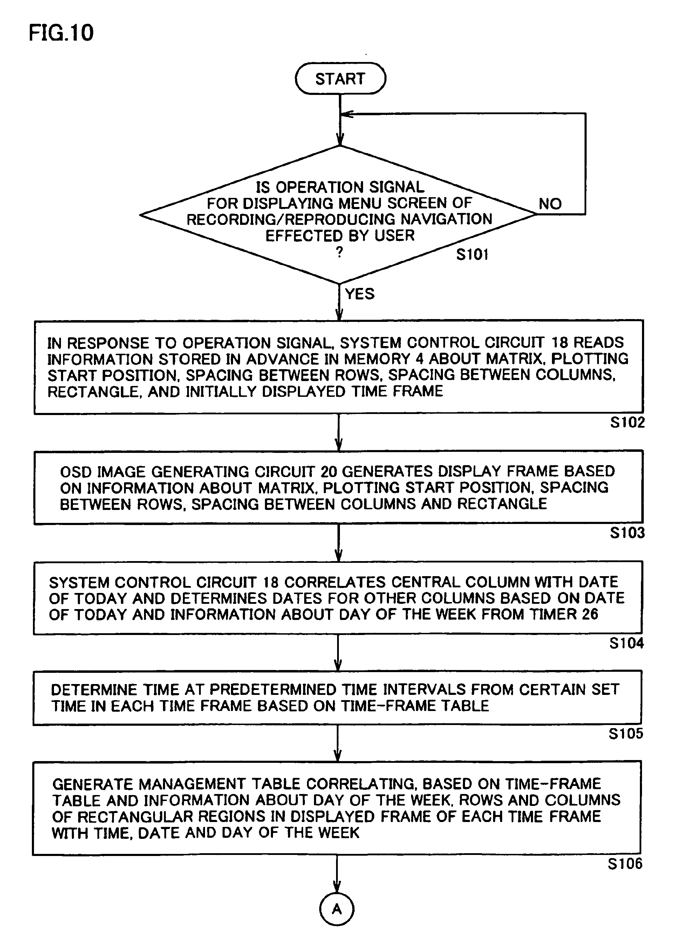

Figs. 10, 11 and 12 show respective sections of the flow chart of the operation to display a menu screen of recording and reproducing navigation.

Referring to Fig. 10, system control circuit 18 determines whether there is an operation signal to activate a menu screen of recording/reproducing navigation based on an operation by the user through operation unit 2 (step S 101).

In step S101, when an operation signal for displaying a menu screen in recording/reproducing navigation is not provided, system control circuit 18 continues to determine whether or not an operation signal for displaying a menu screen in recording/reproducing navigation is provided.

When determination is made that there is an operation signal of activating a menu screen of recording/reproducing navigation at step S101, control proceeds to step S102 where system control circuit 18 reads in the configurational information of the menu screen prestored in memory 4. Specifically, the matrix information of the plurality of rectangular regions displayed on the menu screen, the plotting start position, the spacing between rows, the spacing between columns, information about the rectangular shape, initial display time frame information, and the like are read in.

OSD image generating circuit 20 displays a plurality of rectangular regions on the menu screen based on the matrix information, the plotting start position information, the spacing between rows, the spacing between columns, and information about the rectangular shape (step S103).

Based on today's date measured by timer 26 and the day of the week information stored in hard disk device 10, system control circuit 18 correlates today's date with the central column in the matrix to determine respective days of the week corresponding to the other columns, with the central column as the origin (step S104).

Based on the time frame table, system control circuit 18 determines, from the time set in each time frame, respective times corresponding to the rows at predetermined time intervals (step S 105).

Based on the time frame table and the day of the week information, system control circuit 18 generates a management table correlating the rows and columns of the rectangular regions displayed on the menu screen with respective times, dates and days of the week (step S106).

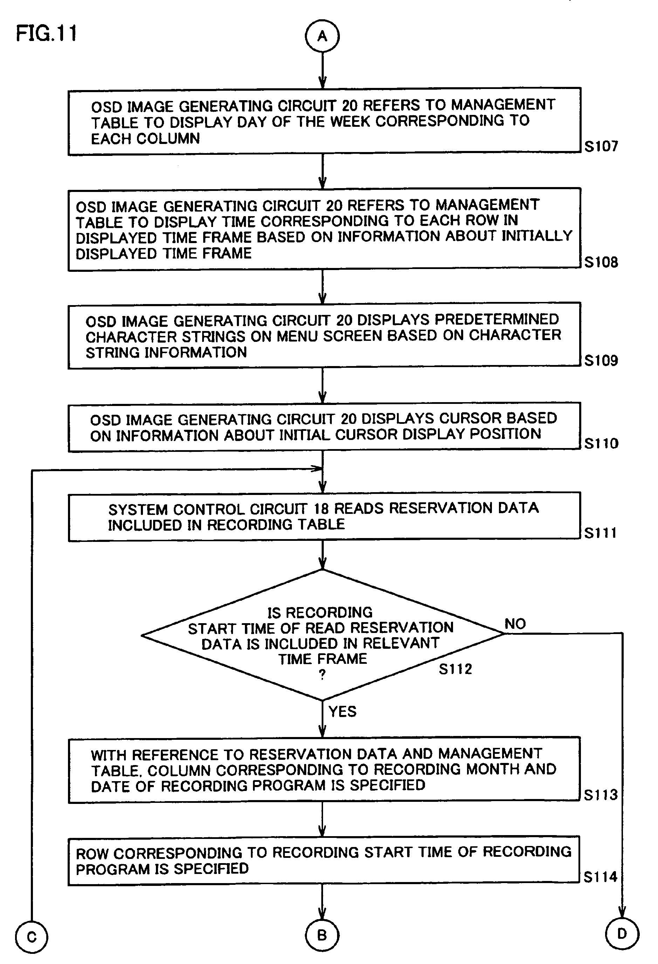

Referring to Fig. 11, OSD image generating circuit 20 refers to the management table to display a day of the week corresponding to each column of the plurality of rectangular regions displayed in a matrix on the menu screen (step S107).

OSD image generating circuit 20 refers to the management table to display the time corresponding to each row of the plurality of rectangular regions displayed in a matrix on the menu screen in the displayed time table based on the initial display time frame information (step S108).

OSD image generating circuit 20 displays predetermined character strings on the menu screen based on the character string information (step S109).

OSD image generating circuit 20 displays a cursor based on the cursor initial display position information (step S 110).

The character string information and cursor initial display position information may be prestored in memory 4 or stored in hard disk device 10.

System control circuit 18 reads in the reservation data in the recording table (step S111).

When the recording start time of the reservation data read in is not within the corresponding time frame at step S 112, system control circuit 18 moves control to step S120.

When the recording start time of the reservation data read in is within the corresponding time frame on the displayed menu screen at step S 112, system control circuit 18 refers to the management table and the reservation data included in the recording table read in to identify the row corresponding to the recording date of the program under recording reservation (step S 113).

Then, system control circuit 18 identifies the column corresponding to the recording start time of the scheduled program (step S 114).

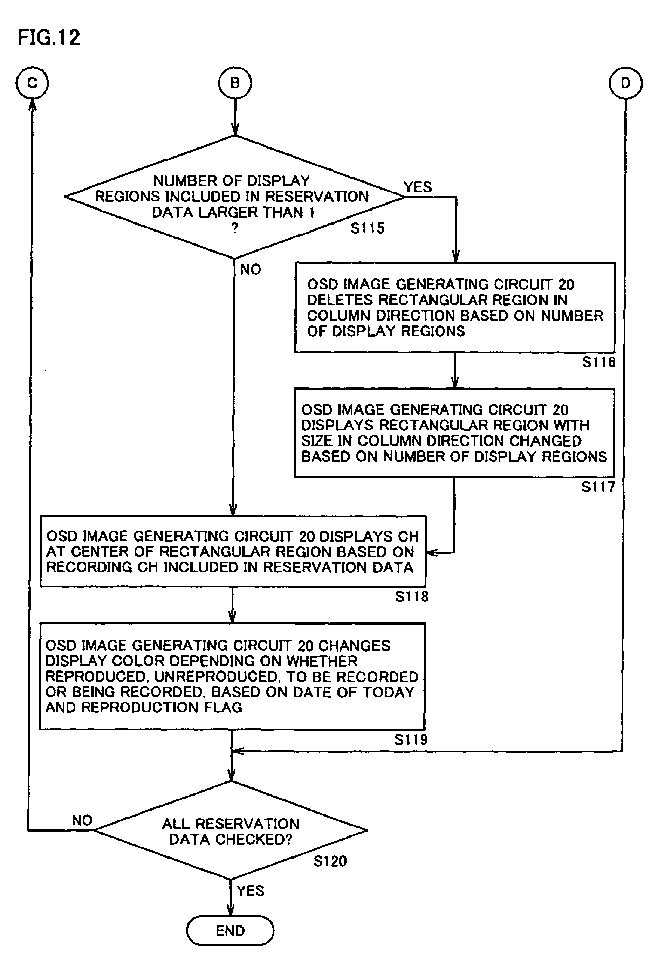

Referring to Fig. 12, system control circuit 18 determines whether the number of display regions set in the reservation data is larger than 1 or not (step S 115).

When the number of display regions included in the reservation data is larger than 1 at step S 115, OSD image generating circuit 20 deletes a rectangular region in the column direction based on the number of display regions. For example, when the number of display regions included in the reservation data is 2, OSD image generating circuit 20 deletes the rectangular region located immediately below the rectangular region in the column direction that corresponds to the referred reservation data (step S 116).

OSD image generating circuit 20 displays a rectangular region having the size in the column direction modified based on the number of display regions included in the reservation data (step S 117).

For example, when the number of display regions included in the reservation data is 2, OSD image generating circuit 20 displays the rectangular region corresponding to the reservation data with its size enlarged to match two rectangular regions in the column direction.

Based on the CH specified for recording included in the reservation data, OSD image generating circuit 20 displays the CH at the central area of the rectangular region corresponding to the reservation data (step S118).

When the number of display regions included in the reservation data is smaller than 1 at step S 115, system control circuit 18 moves control to step S118.

System control circuit 18 determines the status of the referred reservation data based on today's date and the reproduction flag indicative of whether the program is reproduced or not. In other words, determination is made whether the referred reservation data corresponds to the status of: i) already reproduced, ii) not yet reproduced, iii) set to be recorded, and iv) currently recorded. Specifically, when the referred reservation data indicates that the program of interest has been recorded and reproduced before today's date, system control circuit 18 determines that the reservation data corresponds to a program already reproduced. When the referred reservation data indicates that the program of interest is recorded before today's date but not yet reproduced, system control circuit 18 determines that the reservation data corresponds to a program of unreproduction. When the referred reservation data indicates that the program is set to be recorded subsequent to today's date, system control circuit 18 determines that the reservation data corresponds to a program of future recording. When the referred reservation data indicates that the program is currently being recorded at today's date, system control circuit 18 determines that the reservation data corresponds to a program currently being recorded.

OSD image generating circuit 20 modifies the display color of the rectangular region corresponding to the reservation data according to each status of i), ii), iii), and iv) set forth above (step S119).

Then, system control circuit 18 determines whether all the reservation data in the recording table has been checked or not (step S120).

When determination is made that all the recording data in the recording table has not been checked at step S120, system control circuit 18 returns control to step S111.

When determination is made that all the recording data in the recording table has been checked at step S120, system control circuit 18 ends the process.

When an operation signal of selecting a time frame is input by the user during activation of a menu screen, system control circuit 18 responds to the operation signal to refer to the matrix corresponding to the selected time frame in the management table. Then, OSD image generating circuit 20 displays the time corresponding to each row on the menu screen. Subsequently, system control circuit 18 carries out an operation similar to the operation starting from step S111 in the flow chart of Fig. 11. Therefore, description thereof will not be repeated.

In accordance with the present invention, the recording reservation and reproduction status of a time frame specified by the user can be easily identified by selecting an appropriate time frame among a plurality of predetermined time frames in a recording/reproducing navigation mode, i.e. by dividing one day into the time frames of every 6 hours corresponding to morning navigation, afternoon navigation, evening navigation, and midnight navigation.

By displaying a menu screen corresponding to each of a plurality of divided predetermined time frames in a recording/reproducing navigation mode, the user can identify the recording reservation and reproduction status at a certain time frame in a short period of time, without having to conduct scrolling.

Further, when the user is searching for an already-recorded program, the desired recorded program can be easily identified by selecting the recorded time frame,

Furthermore, by displaying a plurality of rectangular regions having the date and time set in correspondence on the menu screen in the recording/reproducing navigation mode, the user can modify the reservation data easily by selecting a relevant rectangular region and entering a channel.

### Second Embodiment

An information recording and reproducing apparatus according to a second embodiment of the present invention has a configuration basically similar to that of information recording and reproducing apparatus 100 of the first embodiment shown in Fig. 1. Therefore, the basic configuration of the information recording and reproducing apparatus of the second embodiment will not be repeated here.

Information recording and reproducing apparatus 100 of the second embodiment has a recording table differing from the recording table of the first embodiment in data configuration. In other words, the recording table that is to be referred to by system control circuit 18 when a menu screen in recording/reproducing navigation corresponding to respective time frames of morning navigation, afternoon navigation, evening navigation, and midnight navigation is to be activated differs, as will be set forth hereinafter.

In the second embodiment, a plurality of recording tables, each corresponding to an appropriate one of a plurality of time frames, are employed. Recording tables corresponding to each of the time frames of morning navigation, afternoon navigation, evening navigation, and midnight navigation are stored in memory 4 or hard disk device 10.

A recording table corresponding to each time frame includes reservation data of a program for future recording and reservation data of a program already recorded over a span of a predetermined period. The recording table includes, but are not limited to, reservation data of one week before and after today's date measured by timer 26.

An operation of activating a menu screen of a time frame corresponding to evening navigation in response to an operation signal by the user will be described hereinafter, by way of example.

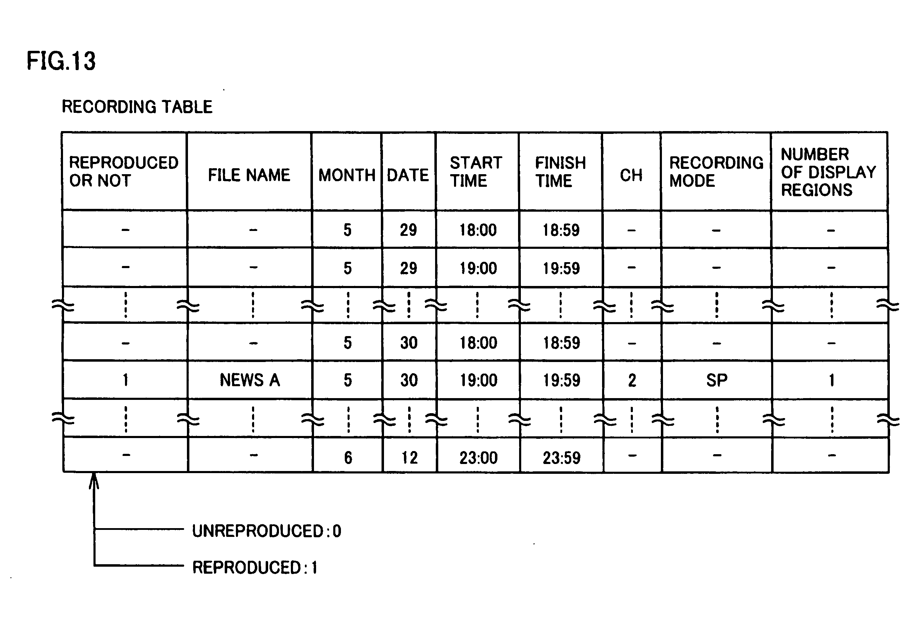

Fig. 13 shows an example of a recording table of a time frame corresponding to evening navigation according to the second embodiment of the present invention.

This recording table includes reservation data having the time frame corresponding to evening navigation (from 6:00 p.m. to 23:59 p.m.), and a table with the time for every predetermined time intervals and date set in correspondence.

For recording reservation, the reproduction flag, file name, CH, recording mode, number of display regions, and data for resume reproduction (not shown) are registered on respective cells corresponding to a relevant date and start time in the recording table.

System control circuit 18 may refer to a recording table of the time frame corresponding to evening navigation based on the time frame information at the header in the data in the recording table in response to an operation signal of activating a menu screen of the time frame corresponding to evening navigation. Alternatively, system control circuit 18 may refer to respective plurality of recording tables, and then refer to a recording table corresponding to the time frame of evening navigation based on the time frame flag located at the beginning of the table.

Then, system control circuit 18 refers to a recording table according to the time frame selected by the user. For example, when evening navigation is selected in response to an operation signal by the user, system control circuit 18 refers to the recording table corresponding to the time frame of evening navigation as shown in Fig. 13. Based on the date and start time in the recording table, system control circuit 18 generates a management table to display a menu screen.

When the date measured by timer 26 is changed, system control circuit 18 updates the recording table. Specifically, system control circuit 18 updates the recording table so as to include registered reservation data of one week before today and one week after today measured by timer 26 and to include a table correlating dates with times at predetermined time intervals in the selected time frame.

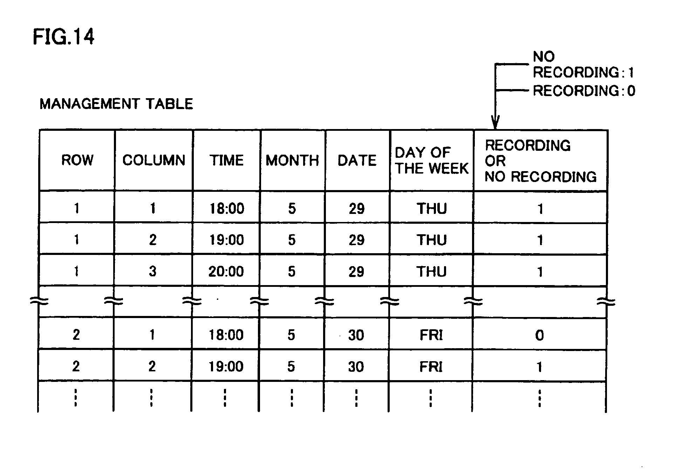

Fig. 14 shows a management table to display a menu screen of a time frame corresponding to evening navigation.

System control circuit 18 sets in correspondence the date and start time included in the recording table described with reference to Fig. 13. At this stage, system control circuit 18 correlates today's date measured by timer 26 with the central column in the plurality of rectangular regions displayed in a matrix on the menu screen. Then, system control circuit 18 sets in correspondence the date and time of one week before and after today's data correlated with the central column as the origin. System control circuit 18 registers a day of the week corresponding to the date into the management table based on day of the week information stored in memory 4 or hard disk 10.

Based on the generated management table, OSD image generating circuit 20 generates a signal displaying a menu screen corresponding to evening navigation.

In response to an operation signal of modifying the time frame by the user, system control circuit 18 refers to the recording table of the corresponding time frame to generate a management table. Based on the generated management table, OSD image generating circuit 20 generates a signal to display a menu screen corresponding to the selected time frame.

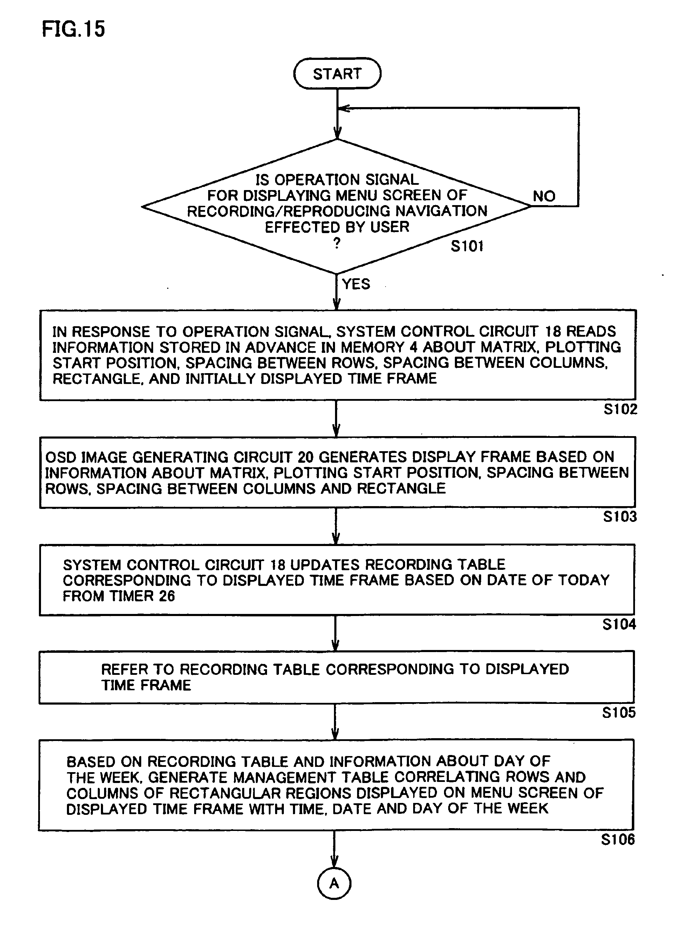

Fig. 15 is a flow chart representing a section of the operation to display a menu screen, comparable to the flow chart of Fig. 10.

Referring to Fig. 15, steps S101-S103 are identical to steps S101-S103 of the flow chart of Fig. 10 described in the first embodiment. Therefore, description thereof will not be repeated.

At step S104, system control circuit 18 updates the recording table corresponding to the displayed time frame among morning navigation, afternoon navigation, evening navigation, and midnight navigation based on today's date measured by timer 26. System control circuit 18 updates the recording table so as to include registered reservation data and the table with the time and date for every predetermined time intervals corresponding to the displayed time frame set in correspondence over a span of predetermined period before and after today's data measured by timer 26. Alternatively, system control circuit 18 may update a plurality of recording tables corresponding to each of the plurality of time frames at this stage.

Then, system control circuit 18 refers to a recording table corresponding to the displayed time frame (step S105).

Based on the recording table corresponding to the displayed time frame and day of the week information, system control circuit 18 generates a management table corresponding to the matrix of a plurality of rectangular regions displayed on the menu screen, with the time, the date, and day of the week set in correspondence (step S106).

When there is an operation signal of selecting a time frame by the user during activation of a menu screen, system control circuit 18 refers to a recording table corresponding to the selected time frame according to the operation signal. Based on the referred recording table, system control circuit 18 updates the management table. Based on the updated management table, OSD image generating circuit 20 displays the time corresponding to each row on the menu screen. The remaining operations are similar to those of the first embodiment. Therefore, description thereof are not repeated.

The second embodiment provides advantages similar to those of the first embodiment.

The management table described with reference to Fig. 14 is not particularly limited to one generated every time a time frame is selected. For example, a management table corresponding to each time frame may be prepared. In other words, a management table corresponding to the time frame of each of morning navigation, afternoon navigation, evening navigation, and midnight navigation may be generated in response to the recording table being updated after the date measured by timer 26 changes. In response to an operation signal of modifying the time frame by the user, OSD image generating circuit 20 may generate a signal to display a menu screen based on a management table corresponding to the selected time frame.

### Third Embodiment

The information recording and reproducing apparatus according to a third embodiment of the present invention has a configuration basically similar to that of information recording and reproducing apparatus 100 of the first embodiment shown in Fig. 1. Therefore, the configuration of the information recording and reproducing apparatus of the third embodiment will not be repeated here.

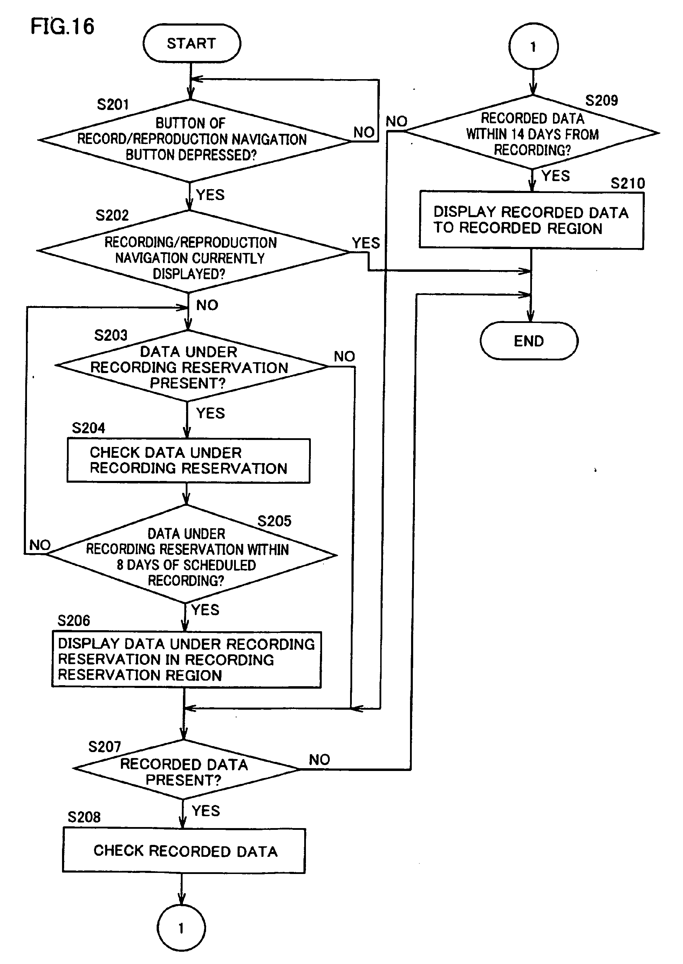

Fig. 16 is a flow chart representing an operation when a menu screen in recording/reproducing navigation is displayed in the third embodiment.

At step S201, system control circuit 18 waits for depression of the recording/reproducing navigation button on, for example, a remote controller. When the recording/reproducing navigation button is depressed, control proceeds to step S202 to determine whether a menu screen of recording/reproducing navigation is currently displayed or not. When a menu screen of recording/reproducing navigation is displayed, this operation ends.

When a menu screen of recording/reproducing navigation is not displayed, control proceeds to step S203 where determination is made whether there is recording reservation data or not. When there is no recording reservation data, control proceeds to step S207, otherwise, control proceeds to step S204 to check the contents of the recording reservation data. At step S205, determination is made whether the recording reservation data is within 8 days from the scheduled recording day. When the recording reservation data of interest is not within 8 days from the recording scheduled date, control returns to step S203 without displaying the recording reservation date on the menu screen. When the recording reservation data of interest is within 8 days from the recording scheduled date, control proceeds to step S206 to display the recording reservation data at the recording reservation region on the menu screen.

At step S207, determination is made whether there is already-recorded data. When there is no already-recorded data, the operation ends, otherwise, control proceeds to step S208 to check the contents of the already-recorded data. At step S209, determination is made whether the already-recorded data has been recorded within 14 days. When the already-recorded data of interest is not within 14 days from its recording date, control returns to step S207 without displaying that recording reservation data on the menu screen. When the already-recorded data of interest is within 14 days from its recording date, control proceeds to step S210 to display the already-recorded data at the recorded data region on the menu screen.

The third embodiment provides advantages similar to those of the first embodiment.

## Claims

1. A data recording and reproducing apparatus providing a recording reservation mode for recording a recording reservation and a recording and reproducing navigation mode to view a status of a recording reservation, said apparatus comprising:
an input unit (2) for receiving an external designation input;
a clock unit (26) for measuring date and time;
a storage unit (4,10) for storing information associated with an operation of said recording and reproducing apparatus and for storing reproduction information indicating whether recording of a program under recording reservation is already reproduced or not;
a receiving unit (6) for receiving program data of a channel desired;
a control unit (16) for controlling an operation of said data recording and reproducing apparatus, said control unit (16) further comprising:
a recording reservation unit (18) for generating a program reservation information identifying a channel number and a date and time of recording a program to be recorded in response to an input from said input unit (2), and for storing said generated recording reservation information in said storage unit (4, 10), when said recording and reproducing apparatus is in the recording reservation mode;
a display image generation unit (18,20) for generating an image signal to display said stored program reservation information on a menu screen, when said recording and reproducing apparatus is in the recording and reproducing navigation mode;
a recording designation unit (18) for designating recording of program data received by said receiving unit (6) into said storage unit (4, 10) according to a channel number included in said program reservation information when the date and time measured by said clock unit (26) arrives at a recording start date and time included in said program reservation information;
a reproduction designation unit (18) for designating reproduction of program data already recorded corresponding to a region in the predetermined shape in which said channel number is displayed from said storage unit (4) in response to an input from said input unit (2);
a reproduction information generation unit (18) generating and storing into said storage unit (4, 10) said reproduction information based on designation of reproduction by said reproduction designation unit (18); and
a display color modify unit (18) modifying a color of each region in the predetermined shape depending upon whether a program is under recording reservation or not, already recorded or not, and already reproduced or not, based on said program reservation information and said reproduction information stored in said storage unit (4, 10),
**characterized in that**
said control unit further comprises a time frame selection unit (18) for selecting one of a plurality of predetermined time frames in response to an input from said input unit (2), said plurality of predetermined time frames dividing a day into predetermined nonoverlapping time intervals;
said storage unit (4, 10) is adapted for storing a time frame table including a start time and a finish time for each of said plurality of predetermined time frames, and configurational information to display on a menu screen a plurality of regions in a predetermined shape in a matrix corresponding to the plurality of predetermined time frames, respectively, and
said display image generation unit (18,20) is adapted for reading said configurational information from said storage unit (4, 10), for generating a menu screen corresponding to a selected predetermined time frame, wherein said menu screen includes a plurality of regions in a predetermined shape in a matrix according to said configurational information read from said storage unit (4,10), each of the plurality of regions corresponding to a respective date of a plurality of dates and to a respective time interval within the selected time frame, and for displaying a channel number included in said program reservation information at a region in the predetermined shape corresponding to a date and time of recording included in said recording reservation information,
wherein said plurality of dates correlated with said plurality of regions in the predetermined shape includes a predetermined date in the past and a predetermined date in the future, and
wherein one of a central row and a central column in the matrix shaped menu screen generated by said display image generation unit (18, 20) corresponds to the day of the week of the date measured by said clock unit (26).

2. The data recording and reproducing apparatus according to claim 1, wherein
said program reservation information is formed corresponding to each predetermined time frame, and
said display image generation unit (18, 20) displays (S118) a channel number included in the program reservation information at a region in the predetermined shape corresponding to a recording date and time included in said program reservation information corresponding to a predetermined time frame selected by said time frame selection unit (18).

3. The data recording and reproducing apparatus according to claim 1 or 2, wherein said plurality of predetermined time frames corresponds to four time frames of one day divided into every 6 hours, said four time frames corresponding to morning, afternoon, evening, and midnight.

4. The data recording and reproducing apparatus according to any of claims 1 to 3, wherein said time frame selection unit (18) displays on said menu screen a plurality of specific regions corresponding to said plurality of predetermined time frames, respectively, and selects a predetermined time frame corresponding to a specific region selected in response to an input from said input unit (2).

5. The data recording and reproducing apparatus according to any of claims 1 to 4, further comprising a cursor moving unit (18) for moving a cursor on said menu screen in response to an input from said input unit (2),
wherein said time frame selection unit (18) is adapted for selecting a next predetermined time frame subsequent to the predetermined time frame corresponding to said menu screen in response to said cursor being moved from a region in the predetermined shape corresponding to a last time to a region other than said plurality of regions in the predetermined shape.

6. The data recording and reproducing apparatus according to any of claims 1 to 5, further comprising:
a select control unit (18) for selecting one of said plurality of regions in the predetermined shape on said menu screen in response to an input from said input unit (2), and
a program reservation information modify unit (18) for modifying contents of program reservation information of a recording date and time corresponding to a region in the predetermined shape selected by said select control unit (18) in response to an input from said input unit (2).

## Patentansprüche

1. Vorrichtung zum Aufzeichnen und Wiedergeben von Daten, die einen Aufzeichnungsreservierungs-Modus zum Aufzeichnen einer Aufzeichnungsreservierung sowie einen Aufzeichnungs-und-Wiedergabenavigations-Modus zum Betrachten eines Status einer Aufzeichnungsreservierung bereitstellt, wobei die Vorrichtung umfasst:
eine Eingabeeinheit (2) zum Empfangen einer externen Festlegungs-Eingabe;
eine Uhr-Einheit (26) zum Messen von Datum und Uhrzeit;
eine Speicher-Einheit (4, 10) zum Speichern von Informationen, die mit einer Funktion der Aufzeichnungs-und-Wiedergabe-Vorrichtung verbunden sind, sowie zum Speichern von Wiedergabeinformationen, die anzeigen, ob die Aufzeichnung eines Programms mit Aufzeichnungsreservierung bereits wiedergegeben wird oder nicht;
eine Empfangs-Einheit (6) zum Empfangen von Programmdaten eines gewünschten Kanals;
eine Steuereinheit (16) zum Steuern einer Funktion der Vorrichtung zum Aufzeichnen und Wiedergeben von Daten, wobei die Steuereinheit (16) des Weiteren umfasst:
eine Aufzeichnungsreservierungseinheit (18) zum Erzeugen von Programmreservierungs-Informationen, die eine Kanalnummer und ein Datum sowie eine Uhrzeit zum Aufzeichnen eines aufzuzeichnenden Programms angeben, in Reaktion auf eine Eingabe über die Eingabe-Einheit (2) sowie zum Speichern der erzeugten Aufzeichnungsreservierungs-Informationen in der Speicher-Einheit (4, 10), wenn sich die Aufzeichnungs-und-Wiedergabe-Vorrichtung in dem Aufzeichnungsreservierungs-Modus befindet;
eine Anzeigebilderzeugungs-Einheit (18, 20) zum Erzeugen eines Bildsignals zur Anzeige der gespeicherten Programmreservierungs-Informationen auf einem Menü-Bildschirm, wenn sich die Aufzeichnungs-und-Wiedergabe-Vorrichtung in dem Aufzeichnungs-und-Wiedergabenavigations-Modus befindet;
eine Aufzeichnungsfestlege-Einheit (18) zum Festlegen von Aufzeichnung durch die Empfangs-Einheit (6) empfangener Programmdaten in der Speicher-Einheit (4, 10) entsprechend einer in den Programmreservierungs-Informationen enthaltenen Kanalnummer, wenn das Datum und die Uhrzeit, die durch die Uhr-Einheit (26) gemessen werden, ein Datum und eine Uhrzeit zum Starten einer Aufzeichnung erreichen, die in den Programmreservierungs-Informationen enthalten sind;
eine Wiedergabe-Festlegeeinheit (18) zum Festlegen von Wiedergabe bereits aufgezeichneter Programmdaten entsprechend einem Bereich in der vorgegebenen Form, in dem die Kanalnummer aus der Speicher-Einheit (4) angezeigt wird, in Reaktion auf eine Eingabe über die Eingabeeinheit (2);
eine Wiedergabeinformationserzeugungs-Einheit (18), die die Wiedergabeinformationen auf Basis von Festlegung von Wiedergabe durch die Wiedergabe-Festlegeeinheit (18) erzeugt und in der Speicher-Einheit (4, 10) speichert; und
eine Anzeigefarbemodifizierungs-Einheit (18), die eine Farbe jedes Bereiches in der vorgegebenen Form in Abhängigkeit davon, ob für ein Programm eine Aufzeichnungsreservierung vorliegt oder nicht, es bereits aufgezeichnet ist oder nicht und bereits wiedergegeben ist oder nicht, auf Basis der in der Speicher-Einheit (4, 10) gespeicherten Programmreservierungs-Informationen und Wiedergabe-Informationen modifiziert,
**dadurch gekennzeichnet, dass**
die Steuereinheit des Weiteren eine Zeitrahmenauswähl-Einheit (18) umfasst, mit der eine Vielzahl vorgegebener Zeitrahmen in Reaktion auf eine Eingabe über die Eingabeeinheit (2) ausgewählt werden, wobei die Vielzahl vorgegebener Zeitrahmen einen Tag in vorgegebene, nicht überlappende Zeitintervalle unterteilt;
die Speicher-Einheit (4, 10) so eingerichtet ist, dass sie eine Zeitrahmen-Tabelle, die eine Anfangszeit sowie eine Endzeit für jeden der Vielzahl vorgegebener Zeitrahmen enthält, und Konfigurationsinformationen zum Anzeigen einer Vielzahl von Bereichen in einer vorgegebener Form in einer Matrix, die jeweils der Vielzahl vorgegebener Zeitrahmen entsprechen, speichert, und
die Anzeigebilderzeugungs-Einheit (18, 20) so eingerichtet ist, dass sie die Konfigurationsinformationen aus der Speicher-Einheit (4, 10) ausliest, einen Menü-Bildschirm erzeugt, der einem ausgewählten vorgegebenen Zeitrahmen entspricht, wobei der Menü-Bildschirm eine Vielzahl von Bereichen in einer vorgegebenen Form in einer Matrix entsprechend den aus der Speicher-Einheit (4, 10) gelesenen Konfigurationsinformationen enthält und jeder der Vielzahl von Bereichen einem jeweiligen Datum einer Vielzahl von Daten sowie einem entsprechenden Zeitintervall innerhalb des ausgewählten Zeitrahmens entspricht, und sie eine Kanalnummer, die in den Programmreservierungs-Informationen enthalten ist, in einem Bereich in der vorgegebenen Form entsprechend einem Datum und einer Uhrzeit zum Aufzeichnen anzeigt, die in den Aufzeichnungsreservierungs-Informationen enthalten sind,
wobei die Vielzahl von Daten, die mit der Vielzahl von Bereichen in der vorgegebenen Form korrelieren, ein vorgegebenes Datum in der Vergangenheit und ein vorgegebenes Datum in der Zukunft einschließen, und
wobei ein mittlere Reihe oder eine mittlere Spalte in dem durch die Anzeigebilderzeugungs-Einheit (18, 10) erzeugten matrixförmigen Menü-Bildschirm dem Wochentag des durch die Uhr-Einheit (26) gemessenen Datums entspricht.

2. Vorrichtung zum Aufzeichnen und Wiedergeben von Daten nach Anspruch 1, wobei die Programmreservierungs-Informationen entsprechend jedem vorgegebenen Zeitrahmen ausgebildet werden, und
die Anzeigebilderzeugungs-Einheit (18, 20) eine Kanalnummer, die in den Programmreservierungs-Informationen enthalten ist, in einem Bereich in der vorgegebenen Form entsprechend einem Datum und einer Uhrzeit zum Aufzeichnen anzeigt (S118), die in den Programmreservierungs-Informationen enthalten sind, die einem durch die Zeitrahmen-Auswähleinheit (18) ausgewählten Zeitrahmen entsprechen.

3. Vorrichtung zum Aufzeichnen und Wiedergeben von Daten nach Anspruch 1 oder 2, wobei die Vielzahl vorgegebener Zeitrahmen vier Zeitrahmen eines in jeweils 6 Stunden unterteilten Tages entsprechen, wobei die vier Zeitrahmen Morgen, Nachmittag, Abend und Mitternacht entsprechen.

4. Vorrichtung zum Aufzeichnen und Wiedergeben von Daten nach einem der Ansprüche 1 bis 3, wobei die Zeitrahmen-Auswähleinheit (18) auf dem Menü-Bildschirm eine Vielzahl spezifischer Bereiche anzeigt, die jeweils der Vielzahl vorgegebener Zeitrahmen entsprechen, und einen vorgegebenen Zeitraum entsprechend einem in Reaktion auf eine Eingabe über die Eingabe-Einheit (2) ausgewählten spezifischen Bereich auswählt.

5. Vorrichtung zum Aufzeichnen und Wiedergeben von Daten nach einem der Ansprüche 1 bis 4, die des Weiteren eine Cursor-Bewegungseinheit (18) zum Bewegen eines Cursors auf dem Menü-Bildschirm in Reaktion auf eine Eingabe über die Eingabeeinheit (2) umfasst,
wobei die Zeitrahmen-Auswähleinheit (18) so eingerichtet ist, dass sie einen nächsten vorgegebenen Zeitraum nach dem vorgegebenen Zeitrahmen, der dem Menü-Bildschirm entspricht, in Reaktion darauf auswählt, dass der Cursor von einem Bereich in der vorgegebenen Form, der einer letzten Zeit entspricht, zu einem anderen Bereich als der Vielzahl von Bereichen in der vorgegebenen Form bewegt wird.

6. Vorrichtung zum Aufzeichnen und Wiedergeben von Daten nach einem der Ansprüche 1 bis 5, die des Weiteren umfasst:
eine Auswähl-Steuereinheit (18) zum Auswählen eines der Vielzahl von Bereichen in der vorgegebenen Form auf dem Menü-Bildschirm in Reaktion auf eine Eingabe über die Eingabeeinheit (2), und
eine Einheit (18) zum Modifizieren von Programmreservierungs-Informationen, mit der Inhalt von Programmreservierungs-Informationen eines Datums und einer Uhrzeit zum Aufzeichnen entsprechend einem durch die Auswähl-Steuereinheit (18) in Reaktion auf eine Eingabe über die Eingabeeinheit (2) ausgewählten Bereich in der vorgegebenen Form modifiziert werden.

## Revendications

1. Appareil d'enregistrement et de reproduction de données offrant un mode de réservation d'enregistrement pour enregistrer une réservation d'enregistrement, et un mode de navigation d'enregistrement et de reproduction pour visualiser un état d'une réservation d'enregistrement, ledit appareil comprenant :
une unité d'entrée (2) pour recevoir une entrée de désignation externe ;
une unité d'horloge (26) pour mesurer la date et l'heure ;
une unité de mise en mémoire (4, 10) pour mettre en mémoire des informations associées à un fonctionnement de l'appareil d'enregistrement et de reproduction et pour mettre en mémoire des informations de reproduction indiquant si l'enregistrement d'un programme qui fait l'objet d'une réservation d'enregistrement est déjà reproduit ou pas ;
une unité de réception (6) pour recevoir des données de programme d'une chaîne souhaitée ;
une unité de commande (16) pour commander un fonctionnement de l'appareil d'enregistrement et de reproduction de données, l'unité de commande (16) comprenant par ailleurs :
une unité de réservation d'enregistrement (18) pour produire des informations de réservation de programme identifiant un numéro de chaîne et une date et une heure pour l'enregistrement d'un programme à enregistrer, en réponse à une entrée provenant de ladite unité d'entrée (2), et pour mettre en mémoire dans l'unité de mise en mémoire (4, 10) lesdites informations de réservation d'enregistrement produites, quand l'appareil d'enregistrement et de reproduction est en mode de réservation d'enregistrement ;
une unité de production d'image d'affichage (18, 20) pour produire un signal d'image afin d'afficher sur un affichage par menu les informations de réservation de programme mises en mémoire, quand l'appareil d'enregistrement et de reproduction est en mode de navigation d'enregistrement et de reproduction ;
une unité de désignation d'enregistrement (18) pour désigner l'enregistrement de données de programme reçues par l'unité de réception (6), dans l'unité de mise en mémoire (4, 10), selon un numéro de chaîne compris dans les informations de réservation de programme quand la date et l'heure mesurées par l'unité d'horloge (26) arrivent à une date et une heure de début d'enregistrement comprises dans les informations de réservation de programme ;
une unité de désignation de reproduction (18) pour désigner la reproduction de données de programme déjà enregistrées correspondant à une zone de la forme prédéterminée dans laquelle le numéro de chaîne est affiché à partir de l'unité de mise en mémoire (4) en réponse à une entrée provenant de l'unité d'entrée (2) ;
une unité de production d'informations de reproduction (18) qui produit et met en mémoire dans l'unité de mise en mémoire (4, 10) les informations de reproduction sur la base de la désignation de la reproduction par l'unité de désignation de reproduction (18) ; et
une unité de modification de couleur d'affichage (18) qui modifie une couleur de chaque zone de la forme prédéterminée, suivant qu'un programme est l'objet d'une réservation d'enregistrement ou pas, est déjà enregistré ou pas, et est déjà reproduit ou pas, sur la base des informations de réservation de programme et des informations de reproduction mises en mémoire dans l'unité de mise en mémoire (4, 10),
**caractérisé en ce que** l'unité de commande comprend par ailleurs une unité de sélection de tranche horaire (18) pour sélectionner l'une des tranches horaires prédéterminées, en réponse à une entrée provenant de l'unité d'entrée (2), les tranches horaires prédéterminées divisant une journée en intervalles de temps prédéterminés qui ne se chevauchent pas ;
l'unité de mise en mémoire (4, 10) est apte à mettre en mémoire un tableau de tranches horaires qui comprend une heure de début et une heure de fin pour chacune des tranches horaires prédéterminées, et des informations de configuration pour afficher sur un affichage par menu plusieurs zones d'une forme prédéterminée, dans une matrice correspondant aux tranches de temps prédéterminées, respectivement, et
l'unité de production d'image d'affichage (18, 20) est apte à lire les informations de configuration à partir de l'unité de mise en mémoire (4, 10), pour produire un affichage par menu correspondant à une tranche horaire prédéterminée sélectionnée, l'affichage par menu comprenant plusieurs zones de forme prédéterminée, dans une matrice selon les informations de configuration lues à partir de l'unité de mise en mémoire (4, 10), chacune des zones correspondant à une date respective parmi plusieurs dates et à un intervalle de temps respectif, à l'intérieur de la tranche horaire sélectionnée, et pour afficher un numéro de chaîne compris dans les informations de réservation de programme au niveau d'une zone de la forme prédéterminée correspondant à une date et une heure d'enregistrement comprises dans les informations de réservation d'enregistrement,
étant précisé que les dates corrélées avec les zones de forme prédéterminée comprennent une date passée prédéterminée et une date future prédéterminée, et
qu'une rangée centrale ou une colonne centrale de l'affichage par menu en forme de matrice produit par l'unité de production d'image d'affichage (18, 20) correspondant au jour de la semaine de la date mesurée par l'unité d'horloge (26).

2. Appareil d'enregistrement et de reproduction de données selon la revendication 1, dans lequel les informations de réservation de programme sont formées selon chaque tranche horaire prédéterminée, et
l'unité de production d'image d'affichage (18, 20) affiche (S118) un numéro de chaîne compris dans les informations de réservation de programme au niveau d'une zone de la forme prédéterminée correspondant à une date et une heure d'enregistrement comprises dans les informations de réservation de programme correspondant à une tranche horaire prédéterminée sélectionnée par l'unité de sélection de tranche horaire (18).

3. Appareil d'enregistrement et de reproduction de données selon la revendication 1 ou 2, dans lequel les tranches horaires prédéterminées correspondent à quatre tranches horaires d'une journée divisée toutes les 6 heures, ces quatre tranches horaires correspondant au matin, à l'après-midi, au soir et à la nuit.

4. Appareil d'enregistrement et de reproduction de données selon l'une quelconque des revendications 1 à 3, dans lequel l'unité de sélection de tranche horaire (18) affiche sur l'affichage par menu plusieurs zones spécifiques correspondant respectivement aux tranches horaires prédéterminées, et sélectionne une tranche horaire prédéterminée correspondant à une zone spécifique sélectionnée en réponse à une entrée provenant de l'unité d'entrée (2).

5. Appareil d'enregistrement et de reproduction de données selon l'une quelconque des revendications 1 à 4, comprenant par ailleurs une unité de déplacement de curseur (18) pour déplacer un curseur sur l'affichage par menu en réponse à une entrée provenant de l'unité d'entrée (2),
l'unité de sélection de tranche horaire (18) étant apte à sélectionner une tranche horaire prédéterminée suivante qui suit la tranche horaire prédéterminée correspondant à l'affichage par menu, en réponse au déplacement du curseur d'une zone de la forme prédéterminée correspondant à une dernière fois, jusqu'à une zone différente des zones de la forme prédéterminée.

6. Appareil d'enregistrement et de reproduction de données selon l'une quelconque des revendications 1 à 5, comprenant par ailleurs :
une unité de commande de sélection (18) pour sélectionner l'une des zones de la forme prédéterminée sur l'affichage par menu en réponse à une entrée provenant de l'unité d'entrée (2), et
une unité de modification d'informations de réservation de programme (18) pour modifier le contenu d'informations de réservation de programme d'une date et d'une heure d'enregistrement correspondant à une zone de la forme prédéterminée sélectionnée par l'unité de commande de sélection (18) en réponse à une entrée provenant de l'unité d'entrée (2).
